# EUROPEAN PATENT APPLICATION

(11) **EP 1 845 392 A1**
(43) Date of publication of application: **17.10.2007**
(21) Application number: 06712614.4
(22) Date of filing: 30.01.2006
(51) Int. Cl.: G02B 1/11

(54) **SUBSTRATE WITH ANTIREFLECTION COATING**

(30) Priority: 31.01.2005 JP 2005023769
(71) Applicant: Asahi Glass Company, Limited, Chiyoda-ku, Tokyo 100-8405 (JP)
(72) Inventor: YAOITA, Kazuya, , Kanagawa-ku, Yokohama-shi, Kanagawa, 2 (JP); KATAYAMA, Yoshihito, , Kanagawa-ku, Yokohama-shi, Kanagawa, 2 (JP); KIMURA, Yukio, Asahi Glass Company, Limited, Aiko-gun, Kanagawa, 2430301 (JP)
(74) Representative: Müller-Boré & Partner Patentanwälte
(86) International application number: PCT/JP2006/301471
(87) International publication number: WO 2006/080502

(57) **Abstract**

To provide a substrate with an antireflection film having a high visible light transmittance, a low reflectance and a high film resistivity, and having no cracking even when subjected to heat treatment.

A substrate with an antireflection film comprising a transparent substrate and an antireflection film having even number layers in total of a coating film made of a high refractive material having a refractive index of at least 1.90 and a coating film made of a low refractive material having a refractive index of at most 1.56 laminated in this order from the transparent substrate side, wherein at least one coating film made of a high refractive material is a single layer film (a) of a titanium oxynitride layer, a laminated film (b) containing a titanium oxide layer and a zirconium oxide layer or a laminated film (c) containing a titanium oxynitride layer and a zirconium oxide layer.

## Description

### TECHNICAL FIELD

The present invention relates to a substrate with an antireflection film.

### BACKGROUND ART

Windshield glass of an automobile is required to have a high visible light transmittance, a low reflectance, etc. As an antireflection film of low reflecting glass which satisfies such properties, a laminated film of a titanium nitride layer and a silicon oxide layer has been used. Further, in recent years, considering that an antenna is put on the windshield glass, it has been required not to shield electromagnetic waves in addition to having the above properties.

However, a laminated film of a titanium nitride layer and a silicon oxide layer, which has a low film resistivity, shields electromagnetic waves.

Whereas, a laminated film of a titanium oxide layer and a silicon oxide layer has been known as an antireflection film having a high visible light transmittance, a low reflectance and a high film resistivity.

However, a glass plate comprising a laminated film of a titanium oxide layer and a silicon oxide layer as an antireflection film has had such problems that when it is subjected to bending or tempering, cracking occurs on the laminated film by heat treatment.

### DISCLOSURE OF THE INVENTION

### OBJECT TO BE ACCOMPLISHED BY THE INVENTION

Under these circumstances, it is an object of the present invention to provide a substrate with an antireflection film which has a high visible light transmittance, a low reflectance and a high film resistivity, and on which no cracking will occur even when subjected to heat treatment.

### MEANS TO ACCOMPLISH THE OBJECT

To accomplish the above object, the present inventors have conducted extensive studies on a laminated film of a titanium oxide layer and a silicon oxide layer and as a result, found that cracking occurs on the laminated film when subjected to heat treatment because crystallization of the titanium oxide layer proceeds during the heat treatment and the titanium oxide layer shrinks.

The present inventors have further conducted extensive studies and as a result, found that it is possible to prevent cracking even when the laminated film is subjected to heat treatment by a means of incorporating nitrogen in the titanium oxide layer, a means of providing a zirconium oxide layer adjacently to the titanium oxide layer, or a combination thereof. The present invention has been accomplished on the basis of these discoveries.

Namely, the present invention provides the following.
(1) A substrate with an antireflection film comprising a transparent substrate and an antireflection film having even number layers in total of a coating film made of a high refractive material having a refractive index of at least 1.90 and a coating film made of a low refractive material having a refractive index of at most 1.56 laminated in this order from the transparent substrate side, wherein at least one coating film made of a high refractive material is a single layer film (a) of a titanium oxynitride layer, a laminated film (b) containing a titanium oxide layer and a zirconium oxide layer or a laminated film (c) containing a titanium oxynitride layer and a zirconium oxide layer.
(2) A substrate with an antireflection film comprising a transparent substrate and an antireflection film having even number layers in total of a coating film made of a high refractive material having a refractive index of at least 1.90 and a coating film made of a low refractive material having a refractive index of at most 1.56 laminated in this order from the transparent substrate side, wherein at least one coating film made of a high refractive material is a single layer film (a) of a titanium oxynitride layer, a laminated film (b1) of a titanium oxide layer and a zirconium oxide layer or a laminated film (c1) of a titanium oxynitride layer and a zirconium oxide layer.
(3) The substrate with an antireflection film according to the above (2), wherein at least one coating film made of a high refractive material is a laminated film (c1) of a titanium oxynitride layer and a zirconium oxide layer.
(4) A substrate with an antireflection film comprising a transparent substrate and an antireflection film having four layers in total of a coating film made of a high refractive material having a refractive index of at least 1.90 and a coating film made of a low refractive material having a refractive index of at most 1.56 laminated in this order from the transparent substrate side, wherein the antireflection film is an antireflection film having a coating film made of a high refractive material having a refractive index of at least 1.90, a single layer film of silicon oxide, a laminated film (c1) of a titanium oxynitride layer and a zirconium oxide layer, and a,single layer film of silicon oxide laminated in this order from the transparent substrate side.
(5) The substrate with an antireflection film according to the above (4), wherein the coating film made of a high refractive material having a refractive index of at least 1.90 is a single layer film of a titanium oxide layer.
(6) The substrate with an antireflection film according to any one of the above (1) to (5), wherein the reflection of incident light entering from the antireflection film side at an angle of incidence of 60° on the antireflection film face is at most 6% by the visible light reflectance.
(7) The substrate with an antireflection film according to any one of the above (1) to (6), wherein the amount of nitrogen relative to titanium in the titanium oxynitride layer is from 0.1 to 80 at%.
(8) The substrate with an antireflection film according to any one of the above (1) to (7), wherein the amount of nitrogen relative to titanium in the titanium oxynitride layer before heat treatment is from 2 to 40 at%.
(9) The substrate with an antireflection film according to any one of the above (1) to (8), wherein the amount of nitrogen relative to titanium in the titanium oxynitride layer after heat treatment is from 0.1 to 20 at%.
(10) A process for processing a substrate with an antireflection film, comprising a heating step of carrying the substrate with an antireflection film as defined in any one of the above (1) to (9) into a heating furnace and heating it to a bending temperature, and a step of bending it to a desired shape.

### EFFECTS OF THE INVENTION

The substrate with an antireflection film of the present invention has a high visible light transmittance, a low reflectance and a high film resistivity, and no cracking will occur on the antireflection film even when the substrate is subjected to heat treatment.

### BEST MODE FOR CARRYING OUT THE INVENTION

Now, the present invention will be described in detail below.

The substrate with an antireflection film of the present invention is a substrate with an antireflection film comprising a transparent substrate and an antireflection film having even number layers in total of a coating film made of a high refractive material having a refractive index of at least 1.90 and a coating film made of a low refractive material having a refractive index of at most 1.56 laminated in this order from the transparent substrate side, wherein at least one coating film made of a high refractive material is a single layer film (a) of a titanium oxynitride layer, a laminated film (b) containing a titanium oxide layer and a zirconium oxide layer or a laminated film (c) containing a titanium oxynitride layer and a zirconium oxide layer. Preferably, the substrate with an antireflection film of the present invention is a substrate with an antireflection film comprising a transparent substrate and an antireflection film having even number layers in total of a coating film made of a high refractive material having a refractive index of at least 1.90 and a coating film made of a low refractive material having a refractive index of at most 1.56 laminated in this order from the transparent substrate side, wherein at least one coating film made of a high refractive material is a single layer film (a) of a titanium oxynitride layer, a laminated film (b1) of a titanium oxide layer and a zirconium oxide layer or a laminated film (c1) of a titanium oxynitride layer and a zirconium oxide layer.

The substrate with an antireflection film of the present invention is preferably such that the reflection of incident light entering from the antireflection film side at an angle of incidence of 60° on the antireflection film face is at most 6% by the visible light reflectance. Within the above range, sufficient antireflection performance will be obtained.

The transparent substrate used in the present invention is not limited to a transparent and colorless material, and a colored material may be used within a range where the transmittance will not impair the object of the present invention. Particularly, glass is preferred.

Glass is not particularly limited and may, for example, be transparent or color float glass (glass produced by float process) or colored heat-absorbing glass. Further, tempered glass may also be used. Specifically, heat-absorbing glass having a coloring component such as iron ions incorporated in soda lime glass is preferably used.

The substrate with an antireflection film of the present invention may be combined with another optional substrate. For example, the substrate with an antireflection film of the present invention prepared by using a glass plate as a transparent substrate and another glass plate are laminated with an interlayer of e.g. polyvinyl butyral sandwiched therebetween to obtain laminated glass. Such laminated glass is suitable as a windshield of an automobile.

The substrate with an antireflection film of the present invention comprises the above-described transparent substrate, and an antireflection film having even number layers in total of a coating film made of a high refractive material having a refractive index of at least 1.90 and a coating film made of a low refractive material having a refractive index of at most 1.56 laminated in this order from the substrate side.

In the present invention, a high refractive material means a material having a refractive index of at least 1.90, and a low refractive material means a material having a refractive index of at most 1.56.

The total number of the coating film made of a high refractive material and the coating film made of a low refractive material laminated is preferably 2, 4, 6 or 8, more preferably 2, 4 or 6, especially preferably 4.

At least one coating film made of a high refractive material is a single layer film (a) of a titanium oxynitride layer, a laminated film (b) containing a titanium oxide layer and a zirconium oxide layer, or a laminated film (c) containing a titanium oxynitride layer and a zirconium oxide layer. Cracking during heat treatment will be prevented by incorporating nitrogen in the titanium oxide layer or by providing a zirconium oxide layer adjacently to the titanium oxide layer in such a manner. The above films (a) to (c) will be described below.

### (Single Layer Film (a) of Titanium Oxynitride Layer)

The single layer film (a) of a titanium oxynitride layer is a film consisting of only a titanium oxynitride (TiOₓN_{y}) layer.

A titanium oxynitride layer is less likely to undergo crystallization during heat treatment as compared with a titanium oxide layer. Thus, cracking will be suppressed.

In the titanium oxynitride (TiOₓN_{y}) layer, the amount of nitrogen relative to titanium is preferably from 0.1 to 80 at%. A higher effect of suppressing cracking will be obtained when the amount of nitrogen relative to titanium is within the above range. In order to obtain a higher effect of suppressing cracking, the amount of nitrogen relative to titanium before heat treatment is preferably from 2 to 40 at%, particularly preferably from 3 to 40 at%.

Further, in order to obtain more favorable optical properties such as reflectance and transmittance, the amount of nitrogen relative to titanium after heat treatment is preferably from 0.1 to 20 at%, particularly preferably from 0.1 to 10 at%, especially preferably from 0.1 to 5 at%.

In the present invention, the composition (the amount of nitrogen relative to titanium) of the titanium oxynitride layer can be analyzed by e.g. X-ray photoelectron spectroscopy (XPS) or ESCA.

The ratio of oxygen and nitrogen (specifically, values x and y) in the titanium oxynitride layer can hardly be measured directly. However, an approximate value can be estimated from that the amount of nitrogen relative to titanium is determined by measurement, and that the value (x+y) is considered to be from about 1.8 to about 2.1. For example, in a case where the amount of nitrogen relative to titanium is 0.1 at%, the value y is fixed, and it is considered that x=1.799 to 2.099 and Y=0.001.

As an example, values x and y in preferred compositions of the above titanium oxynitride layer are shown in Table 1. These values are values calculated by fixing the value y based on the above presupposition.

**TABLE 1**

| Amount of nitrogen relative to titanium (at%) | x | y |
|---|---|---|
| 0.1 | 1.799 to 2.099 | 0.001 |
| 2 | 1.78 to 2.08 | 0.02 |
| 3 | 1.77 to 2.07 | 0.03 |
| 5 | 1.75 to 2.05 | 0.05 |
| 10 | 1.70 to 2.00 | 0.10 |
| 40 | 1.40 to 1.70 | 0.40 |
| 80 | 1.00 to 1.30 | 0.80 |

Heat treatment may be carried out under conditions which are employed in usual bending or tempering, and can be carried out within a temperature range of from 550 to 700°C, preferably from 600 to 700°C. Specifically, for example, it is carried out under conditions at a preset temperature of 650°C for a heat treatment time of 15 minutes.

The titanium oxynitride layer has a geometrical thickness of preferably from 5 to 160 nm, more preferably from 40 to 140 nm. Within the above range, a high antireflection effect of the antireflection film will be obtained, and cracking is less likely to occur, and in addition, warpage of the substrate will be reduced. Further, the geometrical thickness of the titanium 12 oxynitride layer is especially preferably from 80 to 120 nm, whereby the reflected color of the substrate with an antireflection film is substantially equal to the reflected color of the transparent substrate.

A method for producing the titanium oxynitride layer will be described hereinafter.

### (Laminated Film (b) Containing Titanium Oxide Layer and Zirconium Oxide Layer)

The laminated film (b) containing a titanium oxide layer and a zirconium oxide layer is a laminated film containing at least one titanium oxide layer and at least one zirconium oxide layer. The number of the titanium oxide layer contained in the laminated film (b) is preferably 1 or 2, and the number of the zirconium oxide layer contained in the laminated film (b) is preferably 1 or 2. Further, the titanium oxide layer and the zirconium oxide layer contained in the laminated film (b) are preferably laminated adjacently.

Most part of the zirconium oxide layer is formed into monoclinic structure at the time of film formation. Further, the size of the crystal lattice of the zirconium oxide layer is about equal to that of the titanium oxide layer, whereby lattice matching is likely to occur. It is considered that shrinkage is less likely to occur during heat treatment since re-arrangement of the lattice and thus crystallization in the interior of the titanium oxide layer is suppressed during heat treatment by such a zirconium oxide layer formed adjacent to the titanium oxide layer. Further, it is considered that re-arrangement of titanium oxide is less likely to occur (that is, crystallization is less likely to occur) by the titanium oxide layer having an arranged structure to a certain extent at the time of film formation. Thus, cracking on the titanium oxide layer can be suppressed.

The structure of the laminated film (b) is not particularly limited so long as the titanium oxide layer and the zirconium oxide layer are laminated adjacently to each other, and for example, the following structures may be mentioned:
a laminated film (b1) of a titanium oxide layer and a zirconium oxide layer,
a laminated film of a titanium oxide layer, a zirconium oxide layer and a titanium oxide layer,
a laminated film of a zirconium oxide layer, a titanium oxide layer and a zirconium oxide layer and
a laminated film of a titanium oxide layer, a zirconium oxide layer, a titanium oxide layer and a zirconium oxide layer.

Among them, the laminated film (b1) is preferred. The laminated film (b1) is a film having a titanium oxide (TiO₂) layer and a zirconium oxide (ZrO₂) layer laminated adjacently to each other. The laminated film (b1), which can suppress cracking with a small number of layers, is economically excellent and is practically useful.

More specifically, the following structures may be mentioned:
a two-layer structure of ZrO₂/TiO₂ from the transparent substrate side,
a three-layer structure of TiO_{2/}ZrO_{2/}TiO₂ from the transparent substrate side,
a three-layer structure of ZrO₂/TiO₂/ZrO₂ from the transparent substrate side, and
a four-layer structure of ZrO₂/TiO_{2/}ZrO_{2/}TiO₂ from the transparent substrate side.

In view of suppression of cracking, preferred is a structure having a zirconium oxide layer on the transparent substrate side of the titanium oxide layer (e.g. a two-layer structure of (transparent substrate side) ZrO_{2/}TiO₂ (film face side)), or a structure having a zirconium oxide layer between two titanium oxide layers (e.g. a four-layer structure of (transparent substrate side) ZrO₂/TiO₂/ZrO₂/TiO₂ (film face side) or a three-layer structure of (transparent substrate side) TiO₂/ZrO₂/TiO₂ (film face side)).

In addition, also preferred is a four-layer structure of ZrO_{2/}TiO_{2/}ZrO_{2/}TiO₂ from the transparent substrate side. When the total thickness of the four-layer film is the thickness of the entire coating film made of a high refractive material, the thickness per one titanium oxide layer can be reduced as compared with a two-layer structure of a titanium oxide layer and a zirconium oxide layer, which can also suppress cracking.

The laminated film (b) may have another layer made of a high refractive material within a range not to impair the object of the present invention, so long as properties such as reflectance, transmittance and film resistance will not be affected. Such another layer made of a high refractive material which the laminated film (b) may have may, for example, be a titanium oxide layer, a zinc oxide layer, a tantalum oxide layer, a zirconium oxide layer, a niobium oxide layer, a silicon nitride layer, a zirconium nitride layer or an aluminum nitride layer.

The laminated film (b) preferably has a geometrical thickness of from 40 to 160 nm, more preferably from 50 to 140 nm. Within the above range, a high antireflection effect of the antireflection film will be obtained, and cracking is less likely to occur, and in addition, warpage of the substrate will be reduced. The geometrical thickness of the laminated film (b) is especially preferably from 80 to 130 nm, whereby the reflected color of the substrate with an antireflection film is equal to the reflected color of the transparent substrate.

In a case where the laminated film (b) has a two-layer structure of ZrO_{2/}TiO₂, the geometrical thickness of the titanium oxide layer is preferably from 30 to 150 nm, particularly preferably from 70 nm to 120 nm within a range not to exceed the geometrical thickness of the laminated film (b).

Further, in the case of a three-layer structure of TiO_{2/}ZrO_{2/}TiO₂ or a four-layer structure of ZrO₂/TiO₂/ZrO₂/TiO₂, the geometrical thickness of each titanium oxide layer is preferably from 10 to 80 nm. The geometrical thickness of each titanium oxide layer is especially preferably from 30 to 60 nm, whereby the reflected color of the substrate with an antireflection film is equal to the reflected color of the transparent substrate.

The zirconium oxide layer has a geometrical thickness of preferably from 5 to 50 nm, more preferably from 10 to 40 nm.

When the geometrical thickness of the zirconium oxide layer is at least 5 nm, part which will undergo crystallization at the time of film formation tends to increase, and cracking on the titanium oxide layer will more effectively be suppressed.

The refractive index of the zirconium oxide layer is low as compared with the refractive index of the titanium oxide layer. Accordingly, the refractive index of the laminated film (b) is low as compared with a single layer film of a titanium oxide layer. When the geometrical thickness of the zirconium oxide layer is at most 50 nm, the refractive index of the laminated film (b) is sufficiently high.

Further, when the geometrical thickness of the zirconium oxide layer is at most 50 nm, a possibility that the zirconium oxide layer itself has a large stress to cause cracking during heat treatment, can effectively be suppressed.

The laminated film (b) is obtained by laminating a titanium oxide layer and a zirconium oxide layer, and as the case requires, a layer made of another high refractive material within a range not to affect properties such as reflectance, transmittance and film resistance. Such a layer made of another high refractive material may, for example, be a titanium oxide layer, a zinc oxide layer, a tantalum oxide layer, a zirconium oxide layer, a niobium oxide layer, a silicon nitride layer, a zirconium nitride layer or an aluminum nitride layer. A method for producing the respective layers will be described hereinafter.

### (Laminated Film (c) Containing Titanium Oxynitride Layer and Zirconium Oxide Layer)

The laminated film (c) containing a titanium oxynitride layer and a zirconium oxide layer is a laminated film containing at least one titanium oxynitride layer and at least one zirconium oxide layer. The number of the titanium oxynitride layer contained in the laminated film (c) is preferably 1 or 2, and the number of the zirconium oxide layer contained in the laminated film (c) is preferably 1 or 2. Further, the titanium oxynitride layer and the zirconium oxide layer contained in the laminated film (c) are laminated preferably adjacently.

The laminated film (c) has both the above effects of the single layer film (a) and effects of the laminated film (b), whereby cracking will more effectively be suppressed.

The amount of nitrogen relative to titanium in the titanium oxynitride (TiOₓN_{y}) layer in the laminated film (c) is the same as the amount of nitrogen relative to titanium in the above single layer film (a) of a titanium oxynitride (TiOₓN_{y}) layer. The values x and y are also the same.

The structure of the laminated film (c) is not particularly limited so long as the titanium oxynitride layer and the zirconium oxide layer are laminated adjacently, and for example, the following structures may be mentioned:
a laminated film (c1) of a titanium oxynitride layer and a zirconium oxide layer,
a laminated film of a titanium oxynitride layer, a zirconium oxide layer and a titanium oxynitride layer,
a laminated film of a zirconium oxide layer, a titanium oxynitride layer and a zirconium oxide layer, and
a laminated film of a titanium oxynitride layer, a zirconium oxide layer, a titanium oxynitride layer and a zirconium oxide layer.

Among them, preferred is the laminated film (c1). The laminated film (c1) of a titanium oxynitride layer and a zirconium oxide layer is a film having a titanium oxynitride (TiOₓN_{y}) layer and a zirconium oxide (ZrO₂) layer laminated adjacently.

More specifically, the following structures may be mentioned:
a two-layer structure (c1-1) of ZrO_{2/}TiOₓN_{y} from the transparent substrate side,
a three-layer structure of TiOₓN_{y}/ZrO₂/TiOₓN_{y} from the transparent substrate side,
a three-layer structure of ZrO₂/TiOₓN_{y}/ZrO₂ from the transparent substrate side, and
a four-layer structure of ZrO₂/TiOₓN_{y}/ZrO₂/TiOₓN_{y} from the transparent substrate side.

Among them, in view of suppression of cracking, preferred is a structure having a zirconium oxide layer on the transparent substrate side of a titanium oxynitride layer (e.g. a two-layer structure of (transparent substrate side) ZrO₂/TiOₓN_{y} (film face side)) or a structure having a zirconium oxide layer between two titanium oxynitride layers (e.g. a four-layer structure of ZrO₂/TiOₓN_{y}/ZrO₂/TiOₓN_{y}), and especially preferred is a two-layer structure (laminated film (c1-1)) of (transparent substrate side) ZrO₂/TiOₓN_{y} (film face side).

The geometrical thickness of the laminated film (c) is preferably from 40 to 160 nm, more preferably from 50 to 140 nm. Within the above range, a higher antireflection effect of the antireflection film will be obtained, and cracking is less likely to occur, and im addition, warpage of the substrate can be reduced. Further, the geometrical thickness of the laminated film (c) is especially preferably from 80 to 130 nm, whereby the reflected color of the substrate with an antireflection film is substantially equal to the reflected color of the transparent substrate.

In a case where the laminated film (c) has a two-layer structure of ZrO₂/TiOₓN_{Y}, the thickness of the titanium oxynitride layer is preferably from 30 to 150 nm, particularly preferably from 70 to 120 nm, within a range not to exceed the geometrical thickness of the laminated film (c).

Further, in the case of a three-layer structure of TiOₓN_{y}/ZrO_{2/}TiOₓN_{y} or a four-layer structure of ZrO_{2/}TiOₓN_{y}/ZrO₂/TiOₓN_{y}, the thickness of each titanium oxynitride layer is preferably from 10 to 80 nm. Further, the geometrical thickness of each titanium oxynitride layer is especially preferably from 30 to 60 nm, whereby the reflected color of the substrate with an antireflection film is substantially equal to the reflected color of the transparent substrate.

The zirconium oxide layer has a geometrical thickness of preferably from 5 to 50 nm, more preferably from 10 to 40 nm.

When the geometrical thickness of the zirconium oxide layer is at least 5 nm, part which will undergo crystallization at the time of film formation tends to increase, and cracking on the titanium oxynitride layer can more effectively be suppressed.

The refractive index of the zirconium oxide layer is low as compared with the refractive index of the titanium oxynitride layer. Accordingly, the refractive index of the laminated film (c) is low as compared with the single layer film of a titanium oxynitride layer. When the geometrical thickness of the zirconium oxide layer is at most 50 nm, the refractive index of the laminated film (c) is sufficiently high.

Further, when the geometrical thickness of the zirconium oxide layer is at most 50 nm, a possibility that the zirconium oxide layer itself has a large stress to cause cracking during heat treatment, can effectively be suppressed.

In the laminated film (c1-1), the geometrical thickness of the TiOₓN_{y} layer is preferably from 70 to 120 nm, particularly preferably from 90 to 110 nm. The geometrical thickness of the ZrO₂ layer is preferably from 5 to 50 nm. It is particularly preferably from 8 to 30 nm since if the geometrical thickness of the ZrO₂ layer is too small, abrasion resistance of the antireflection film decreases in some cases. When the geometrical thickness of the TiOₓN_{y} layer and the geometrical thickness of the ZrO₂ layer are within the above ranges, sufficient antireflection effect and effect of preventing cracking will be obtained. In addition to such effects, to suppress warpage of the substrate with an antireflection film during heat treatment, the ratio of the geometrical thickness of the ZrO₂ layer to the geometrical thickness of the TiOₓN_{y} layer is preferably 1/ (4 to 14) by the ZrO₂ layer/the TiOₓN_{y} layer, within a range where the geometrical thicknesses of the respective layers are within the above ranges.

Further, the laminated film (c) may have another layer made of a high refractive material within a range not to impair the object of the present invention, so long as properties such as reflectance, transmittance and film resistivity are not affected. Such another layer made of a high refractive material may, for example, be a titanium oxide layer, a zirconium oxide layer, a tantalum oxide layer, a zirconium oxide layer, a niobium oxide layer, a silicon nitride layer, a zirconium nitride layer or an aluminum nitride layer. Among them, preferred is a titanium oxide layer.

The structure of the laminated film (c) containing a titanium oxide layer may, for example, be a three-layer structure of TiO₂/ZrO₂/TiOₓN_{y}, a four-layer structure of ZrO₂/TiO₂/ZrO₂/TiOₓN_{y} or a four-layer structure of ZrO₂/TiOₓN_{y}/ZrO₂/TiO₂.

In the case of a three-layer structure of TiO₂/ZrO₂/TiOₓN_{y}, the thickness of each of the titanium oxynitride layer and the titanium oxide layer is preferably from 10 to 80 nm. Also in the case of a four-layer structure of ZrO₂/TiO₂/ZrO₂/TiOₓN_{y} and a four-layer structure of ZrO₂/TiOₓN_{y}/ZrO₂/TiO₂, the thickness of each of the titanium oxynitride layer and the titanium oxide layer is preferably from 10 to 80 nm. The geometrical thickness of each of the titanium oxynitride layer and the titanium oxide layer is especially preferably from 30 to 60 nm, whereby the reflected color of the substrate with an antireflection film is substantially equal to the reflected color of a transparent substrate.

A method for producing the respective layers will be described hereinafter.

In the present invention, the coating film made of a high refractive material is, among the above (a) to (c), preferably the laminated film (c) containing a titanium oxynitride layer and a zirconium oxide layer, particularly preferably the laminated film (c1) of a titanium oxynitride layer and a zirconium oxide layer, especially preferably the two-layer structure (c1-1) of ZrO₂ layer/TiOₓN_{y} layer from the substrate side.

In the present invention, at least one coating film made of a high refractive material is any one of the above (a) to (c). That is, in a case where there are two or more coating films made of a high refractive material, a layer other than the above (a) to (c) may be included. However, in such a case, the coating film made of a high refractive material farthest from the transparent substrate is preferably any one of the above (a) to (c).

A layer other than the above (a) to (c) is not particularly limited and may be a known layer. It may, for example, be a titanium oxide layer, a zinc oxide layer, a tantalum oxide layer, a zirconium oxide layer, a niobium oxide layer, a silicon nitride layer, a zirconium nitride layer or an aluminum nitride layer. Among them, preferred is a titanium oxide layer.

In the present invention, since the total number of a coating film made of a high refractive material and a coating film made of a low refractive material laminated on the substrate is preferably 4, it is preferred that the coating film made of a high refractive material corresponding to the third layer is any one of the above (a) to (c) and the coating film made of a high refractive material corresponding to the first layer is a layer made of the above known high refractive material.

The geometrical thickness of the coating film made of a high refractive material other than the above (a) to (c) is, in a case where the coating film is a titanium oxide layer, a zinc oxide layer, a tantalum oxide layer, a zirconium oxide layer or a niobium oxide layer, preferably from 5 to 200 nm, more preferably from 5 to 100 nm, especially preferably from 5 to 60 nm. Further, in a case where the coating film is a silicon nitride layer, a zirconium nitride layer or an aluminum nitride layer, it is preferably from 5 to 160 nm, more preferably from 5 to 100 nm, especially preferably from 5 to 60 nm. Within the above range, a higher antireflection effect of the antireflection film will be obtained, and cracking is less likely to occur, and in addition, warpage of the substrate will be reduced.

The refractive index of the coating film made of a high refractive material is at least 1.90, preferably from 2.00 to 2.60, more preferably from 2.20 to 2.60.

The coating film made of a low refractive material is not particularly limited and may be a known layer.

For example, a silicon oxide (SiO₂) layer is preferred.

The geometrical thickness of the coating film made of a low refractive material is preferably from 5 to 220 nm, more preferably from 20 to 140 nm. Within the above range, a higher antireflection effect will be obtained, and cracking is less likely to occur, and in addition, warpage of the substrate will be reduced.

The refractive index of the coating film made of a low refractive material is at most 1.56, but is preferably at least 1.45.

In the present invention, in a case where the total number of a coating film made of a high refractive material and a coating film made of a low refractive material is 4 or more, the geometrical thicknesses of the plurality of coating films made of a high refractive material may be the same or different. The same applies to the plurality of coating films made of a low refractive material.

As an example of a case where the geometrical thicknesses of a plurality of coating films are different, in the case of four layers in total, the geometrical thickness of the coating film made of a high refractive material as a first layer is from 5 to 20 nm, the geometrical thickness of the coating film made of a low refractive material as a second layer is from 20 to 60 nm, the geometrical thickness of the coating film made of a high refractive material as a third layer is from 70 to 130 nm, and the geometrical thickness of the coating film made of a low refractive material as a fourth layer is from 80 to 120 nm.

The substrate with an antireflection film of the present invention can be obtained by forming on the above-described transparent substrate, an antireflection film by laminating even number layers in total of the above-described coating film made of a high refractive material and the above-described coating film made of a low refractive material in this order from the transparent substrate side.

Now, a method for producing the respective layers will be described.

A method for producing a titanium oxynitride layer, a titanium oxide layer, a zirconium oxide layer and a layer made of another high refractive material laminated as the case requires, and a layer constituting the coating film made of a low refractive material, is not particularly limited, and a known method may be employed. However, these layers are preferably formed by sputtering.

Sputtering may, for example, be DC (direct current) sputtering, AC (alternating current) sputtering, high frequency sputtering or magnetron sputtering. Among them, preferred is DC magnetron sputtering or AC magnetron sputtering with such advantages that the process is stable and film formation in a large area is easy.

In production of a titanium oxynitride layer, for example, preferred is a method of carrying out reactive sputtering using TiOₓ (1<x<2) as a target and using a gas containing a gas containing nitrogen atoms as a sputtering gas.

In production of a titanium oxide layer, for example, preferred is a method of carrying out reactive sputtering using TiOₓ (1<x<2) as a target and using a gas containing a gas containing oxygen atoms as a sputtering gas.

In production of a zirconium oxide layer, for example, preferred is a method of carrying out reactive sputtering using zirconium as a target and using a gas containing a gas containing oxygen atoms as a sputtering gas.

In production of a silicon oxide layer, for example, preferred is a method of carrying out reactive sputtering using silicon carbide (SiC) as a target and using a gas containing a gas containing oxygen atoms as a sputtering gas.

The target may be doped with a known dopant such as Al, Si or Zn within a range not to impair the characteristics of the present invention. In such a case, the amount of the dopant is preferably at most 20 at% based on the total metal atoms contained in the target.

The gas containing a gas containing nitrogen atoms is not particularly limited so long as it contains a gas containing nitrogen atoms, and it may, for example, be a gas containing nitrogen atoms or a gas mixture of a gas containing nitrogen atoms and an inert gas.

The gas containing nitrogen atoms may, for example, be a nitrogen gas (N₂), N₂O, NO, NO₂ or NH₃.

The inert gas may, for example, be a noble gas such as helium, neon, argon, krypton or xenon. Among them, preferred is argon in view of economical efficiency and easiness of discharge.

They may be used alone or as a mixture of two or more.

The gas containing a gas containing oxygen atoms is not particularly limited so long as it contains a gas containing oxygen atoms, and it may, for example, be a gas containing oxygen atoms or a gas mixture of a gas containing oxygen atoms and an inert gas.

The gas containing oxygen atoms may, for example, be an oxygen gas (O₂) or a carbon dioxide gas (CO₂).

The inert gas is as defined above.

They may be used alone or as a mixture of two or more.

The conditions of the sputtering are properly determined depending upon the type, thickness, etc. of the film to be formed. Further, the total pressure of the sputtering gas may be any pressure under which glow discharge is stably carried out.

Preferred embodiments (1) to (4) of the substrate with an antireflection film of the present invention are described below. Among them, the embodiments (1) to (3) are preferred, and the embodiment (2) is especially preferred. In the following, the transparent substrate is represented by G, the coating film made of a high refractive material by H, and the coating film made of a low refractive material by L, and the lamination order of each film from the transparent substrate side is represented by a subscript.
(1) A transparent substrate with an antireflection film having two layers represented by G/H₁/L₁, wherein H₁ is the above (a), (b) or (c).
(2) A transparent substrate with an antireflection film having four layers represented by G/H₁/L₁/H₂/L₂, wherein H₂ is the above (a), (b) or (c).
(3) A transparent substrate with an antireflection film having 6 layers represented by G/H₁/L₁/H₂/L₂/H₃/L₃, wherein H₃ is the above (a), (b) or (c).
(4) A transparent substrate with an antireflection film having 8 layers represented by G/H₁/L₁/H₂/L₂/H₃/L₃/H₄/L₄, wherein H₄ is the above (a), (b) or (c).

With respect to the embodiment (2), more specific preferred examples are described below. ZrO_{2/}TiO_{2/}ZrO_{2/}TiO₂ in (2-1), TiO_{2/}ZrO_{2/}TiO₂ in (2-2)., ZrO_{2/}TiO₂ in (2-3), ZrO_{2/}TiOₓN_{y} in (2-4), and TiOₓN_{y} in (2-5), corresponds to the above H₂.
(2-1) G/TiO₂/SiO₂/ZrO₂/TiO₂/ZrO₂/TiO₂/SiO₂
(2-2) G/TiO₂/SiO₂/TiO₂/ZrO₂/TiO₂/SiO₂
(2-3). G/TiO₂/SiO₂/ZrO₂/TiO₂/SiO₂
(2-4) G/TiO₂/SiO₂/ZrO₂/TiOₓN_{y}/SiO₂
(2-5) G/TiO₂/SiO₂/TiOₓN_{y}/SiO₂

The application of the substrate with an antireflection film of the present invention is not particularly limited, and it is widely applicable. For example, it is suitably used for windshield glass and roof glass of an automobile, glass for displays, glass for buildings, cover glass for solar batteries, etc., and is particularly suitable for windshield of an automobile.

An article having a curved surface such as a windshield of an automobile can be obtained by a heating step of carrying the substrate with an antireflection film of the present invention into a heating furnace and heating it to a bending temperature and a step of bending it to a desired shape. Bending can be carried out within a temperature range of from about 600 to about 700°C (preferably from 650 to 700°C).

### EXAMPLES

Now, the present invention will be described in further detail with reference to Examples. However; the present invention is by no means restricted thereto. In the following Examples, Examples 1 to 14 are Examples of the present invention, and Examples 15 and 16 are Comparative Examples.

### (Production of Glass Substrate with an Antireflection Film)

Using as a glass substrate, heat absorbing glass (Sungreen, manufactured by Asahi Glass Company, Limited, thickness 2 mm, 2.3 mm; hereinafter referred to as "VFL") and transparent and colorless glass (manufactured by Asahi Glass Company, Limited, thickness 2.3 mm; hereinafter referred to as "FL"), layers were formed thereon as described hereinafter to obtain glass substrates with an antireflection film in Examples 1 to 15 having the following structure.

In the following structure, formation of layers was carried out in order from the left side. Further, the geometrical thicknesses of the layers were shown in brackets.

For example, in Example 1, a TiO₂ layer was formed on VFL, a SiO₂ layer was formed on the TiO₂ layer, a ZrO₂ layer was formed on the SiO₂ layer, a TiO₂ layer was formed on the ZrO₂ layer, and then a SiO₂ layer was formed on the TiO₂ layer. In such a manner, on the substrate, the layers were continuously formed from the left side. Further, VFL by itself was used in Example 16.
Example 1: VFL (2 mm)/TiO₂ (12 nm)/SiO₂ (41 nm)/ZrO₂ (20 nm)/TiO₂ (109 nm)/SiO₂ (111 nm)
Example 2: VFL (2 mm)/TiO₂ (12 nm)/SiO₂ (41 nm)/ZrO₂ (15 nm)/TiO₂ (45 nm)/ZrO₂ (15 nm)/TiO₂ (40 nm)/SiO₂ (119 nm)
Example 3: VFL (2 mm)/TiO₂ (12 nm)/SiO₂ (39 nm)/TiO₂ (45 nm)/ZrO₂ (20 nm)/TiO₂ (40 nm)/SiO₂ (94 nm)
Example 4: VFL (2 mm)/TiO₂ (13 nm)/SiO₂ (44 nm)/TiOₓN_{y} (120 nm)/SiO₂ (112 nm)
Example 5: VFL (2 mm)/TiO₂ (10 nm)/SiO₂ (32 nm)/ZrO₂ (20 nm)/TiOₓN_{y} (100 nm)/SiO₂ (107 nm)
Example 6: VFL (2 mm)/TiO₂ (12 nm)/SiO₂ (39 nm)/TiOₓN_{y} (113 nm)/SiO₂ (106 nm)
Example 7: VFL (2 mm)/TiO₂ (11 nm)/SiO₂ (35 nm)/Zr02 (20 nm)/TiOₓN_{y} (106 nm)/SiO₂ (108 nm)
Example 8: VFL (2.3 mm)/TiO₂ (7.5 nm)/SiO₂ (30 nm)/ZrO₂ (10 nm)/TiOₓN_{y} (97 nm)/SiO₂ (97 nm)
Example 9: FL (2.3 mm)/TiO₂ (7 nm)/SiO₂ (29 nm)/ZrO₂ (19 nm)/TiOₓN_{y} (103 nm)/SiO₂ (99 nm)
Example 10: FL (2.3 mm)/TiO₂ (8 nm)/SiO₂ (32 nm)/Zr02 (16 nm)/TiOₓN_{y} (98 nm)/SiO₂ (100 nm)
Example 11: FL (2.3 mm)/TiO₂ (8 nm)/SiO₂ (32 nm)/ZrO₂ (30 nm)/TiOₓN_{y} (98 nm)/SiO₂ (100 nm)
Example 12: FL (2.3 mm)/TiO₂ (8 nm)/SiO₂ (32 nm)/ZrO₂ (8 nm)/TiOₓN_{y} (98 nm)/SiO₂ (100 nm).
Example 13: FL (2.3 mm)/TiO₂ (8 nm)/SiO₂ (32 nm)/TiOₓN_{y} (98 nm)/SiO₂ (100 nm)
Example 14: VFL (2.3 mm)/TiO₂ (8 nm)/SiO₂ (27 nm)/ZrO₂ (20 nm)/TiOₓN_{y} (97 nm)/SiO₂ (91 nm)
Example 15: VFL (2 mm)/TiO₂ (13 nm)/SiO₂ (43 nm)/TiO₂ (120 nm)/SiO₂ (112 nm)
Example 16: VFL (2 mm)

In Examples 1 to 7 and 15, formation of the layers was carried out as follows.

### (TiO₂ layer)

In a vacuum chamber, a TiOₓ (1<x<2) target as a sputtering target was placed on a cathode, and the vacuum chamber was evacuated of air until 1.3×10⁻³ Pa or below. Then, as a sputtering gas, a gas mixture of 96 sccm of an argon gas and 4 sccm of an oxygen gas was introduced. After the introduction, the pressure was 5.7×10⁻¹ Pa. In such a state, reactive sputtering was carried out by using a DC pulsed power supply to form a TiO₂ layer on an object to be treated placed in the vacuum chamber.

### (SiO₂ layer)

In a vacuum chamber, a SiC target as a sputtering target was placed on a cathode, and the vacuum chamber was evacuated of air until 1.3×10⁻³ Pa or below. Then, as a sputtering gas, 100 sccm of an oxygen gas was introduced. After the introduction, the pressure was 5.1×10⁻¹ Pa. In such a state, reactive sputtering was carried out by using a DC pulsed power supply to form a SiO₂ layer on an object to be treated placed in the vacuum chamber.

### (ZrO₂ layer)

In a vacuum chamber, a Zr target as a sputtering target was placed on a cathode, and the vacuum chamber was evacuated of air until 1.3×10⁻³ Pa or below. Then, as a sputtering gas, 60 sccm of an oxygen gas was introduced. After the introduction, the pressure was 3.3×10⁻¹ Pa. In such a state, reactive sputtering was carried out by using a DC pulsed power supply to form a ZrO₂ layer on an object to be treated placed in the vacuum chamber.

### (TiOₓN_{y} layer)

In a vacuum chamber, a TiOₓ (1<x<2) target as a sputtering target was placed on a cathode, and the vacuum chamber was evacuated of air until 1.3×10⁻³ Pa or below. Then, as a sputtering gas, a gas mixture of an argon gas and a nitrogen gas was introduced. After the introduction, the pressure was 5.7×10⁻¹ Pa. In such a state, reactive sputtering was carried out by using a DC pulsed power supply to form a TiOₓN_{y} layer on an object to be treated placed in the vacuum chamber. As the sputtering gas in Examples 4 and 5, a gas mixture of 90 sccm of an argon gas and 10 sccm of a nitrogen gas was used, and as the sputtering gas in Examples 6 and 7, a gas mixture of 80 sccm of an argon gas and 20 sccm of a nitrogen gas was used.

In Examples 8 to 13, formation of the layers was carried out as follows.

### (TiO₂ layer)

In a vacuum chamber, a Ti target as a sputtering target was placed on a cathode, and the vacuum chamber was evacuated of air until 2.7×10⁻³ Pa or below. Then, as a sputtering gas, a gas mixture of an argon gas and an oxygen gas in a molar ratio of 50:50 was introduced until the pressure became 4.0×10⁻¹ Pa. In such a state, reactive sputtering was carried out by using a DC pulsed power supply to form a TiO₂ layer on an object to be treated placed in the vacuum chamber.

### (SiO₂ layer)

In a vacuum chamber, a polycrystalline Si target as a sputtering target was placed on a cathode, and the vacuum chamber was evacuated of air until 2.7×10⁻³ Pa or below. Then, as a sputtering gas, a gas mixture of an argon gas and an oxygen gas (mixture ratio=60:40 (molar ratio)) was introduced until the pressure became 4.0×10⁻¹ Pa. In such a state, reactive sputtering was carried out by using an AC power supply to form a SiO₂ layer on an object to be treated placed in the vacuum chamber.

### (ZrO₂ layer)

In a vacuum chamber, a Zr target as a sputtering target was placed on a cathode, and the vacuum chamber was evacuated of air until 2.7×10⁻³ Pa or below. Then, as a sputtering gas, a gas mixture of an argon gas and an oxygen gas (mixture ratio of 70:30 (molar ratio)) was introduced until the pressure became 6.7×10⁻¹ Pa. In such a state, reactive sputtering was carried out by using a DC pulsed power supply to form a ZrO₂ layer on an object to be treated placed in the vacuum chamber.

### (TiOₓN_{y} layer)

In a vacuum chamber, a TiOₓ (1<x<2) target as a sputtering target was placed on a cathode, and the vacuum chamber was evacuated of air until 2.7×10⁻³ Pa or below. Then, as a sputtering gas, a gas mixture of an argon gas, an oxygen gas and a nitrogen gas (mixture ratio=75:10:15 (molar ratio)) was introduced. After the introduction, the pressure was 6.7×10⁻¹ Pa. In such a state, reactive sputtering was carried out by using a DC pulsed power supply to form a TiOₓN_{y} layer on an object to be treated placed in the vacuum chamber.

In Example 14, formation of the layers was carried out as follows.

### (TiO₂ layer)

In a vacuum chamber, a TiOₓ (1<x<2) target as a sputtering target was placed on a cathode, and the vacuum chamber was evacuated of air until 2.0×10⁻³ Pa or below. Then, as a sputtering gas, an argon gas and an oxygen gas in a molar ratio of 93:7 were introduced until the pressure became 4.3×10⁻¹ Pa. In such a state, reactive sputtering was carried out by using an AC power supply to form a TiO₂ layer on an object to be treated placed in the vacuum chamber.

### (SiO₂ layer)

In a vacuum chamber, a polycrystalline SiAl (Si:Al=90:10 (wt%)) target as a sputtering target was placed on a cathode, and the vacuum chamber was evacuated of air until 2.0×10⁻³ Pa or below. Then, as a sputtering gas, a gas mixture of an argon gas and an oxygen gas (mixture ratio=52:48 (molar ratio)) was introduced until the pressure became 4.3×10⁻¹ Pa. In such a state, reactive sputtering was carried out by using an AC power supply to form a SiO₂ layer on an object to be treated placed in the vacuum chamber.

### (ZrO₂ layer)

In a vacuum chamber, a Zr target as a sputtering target was placed on a cathode, and the vacuum chamber was evacuated of air until 2.0×10⁻³ Pa or below. Then, as a sputtering gas, a gas mixture of an argon gas and an oxygen gas (mixture ratio=70:30 (molar ratio)) was introduced until the pressure became 3.0×10⁻¹ Pa. In such a state, reactive sputtering was carried out by using a DC pulsed power supply to form a ZrO₂ layer on an object to be treated placed in the vacuum chamber.

### (TiOₓN_{y} layer)

In a vacuum chamber, a TiOₓ (1<x<2) target as a sputtering target was placed on a cathode, and the vacuum chamber was evacuated of air until 2.0×10⁻³ Pa or below. Then, as a sputtering gas, a gas mixture of an argon gas, an oxygen gas and a nitrogen gas (mixture ratio=93:3.5:3.5 (molar ratio) was introduced. After the introduction, the pressure was 4.2×10⁻¹ Pa. In such a state, reactive sputtering was carried out by using an AC power supply to form a TiOₓN_{y} layer on an object to be treated placed in the vacuum chamber.

Refractive indices of materials constituting the layers are shown in Table 2. These values are values at a wavelength of 550 nm.

**TABLE 2**

| | Ex. 1 to 7 and Ex. 15 | Ex. 8 to 14 |
|---|---|---|
| TiO₂ | 2.49 | 2.43 |
| SiO₂ | 1.46 | 1.48 |
| ZrO₂ | 2.06 | 2.04 |
| TiOₓN_{y} | 2.44 | 2.39 |

### (Heat Treatment of Glass Substrate with an Antireflection Film)

Each of the above obtained glass substrates with an antireflection film in Examples 1 to 15 and VFL in Example 16 was cut into a size of 100 mm × 100 mm and subjected to heat treatment in a small belt furnace. The conditions of the heat treatment were such that the temperature was 650°C and the heat treatment time was 15 minutes.

### (Properties of Glass Substrate with an Antireflection Film)

### (1) Composition of TiOₓN_{y} Layer

With respect to the TiOₓN_{y} layer in the above obtained glass substrates with an antireflection film in Examples 4 to 14, the amount of nitrogen relative to titanium was measured by ESCA. Further, the values x and y were determined by the above presupposition. In the Table, the amount of nitrogen relative to titanium is represented by N/Ti (at%).

In Examples 4 to 7, measurement was conducted with respect to samples having only a TiOₓN_{y} layer formed on a glass substrate. It is considered that the amount of nitrogen relative to titanium even in a structure having only a TiOₓN_{y} layer formed is the same as the case of measurement with respect to a substrate with an antireflection film.

**TABLE 3**

| | Before heat treatment | | | After heat treatment | | |
|---|---|---|---|---|---|---|
| | N/Ti (at%) | x | y | N/Ti (at%) | x | y |
| Ex. 4 and 5 | 13.1 | 1.669 to 1.969 | 0.131 | 9.2 | 1.708 to 2.008 | 0.092 |
| Ex. 6 and 7 | 16.2 | 1.638 to 1.938 | 0.162 | 0.8 | 1.792 to 2.092 | 0.008 |
| Ex. 8 to 13 | 7.7 | 1.723 to 2.023 | 0.077 | - | - | - |
| Ex. 14 | 4.6 | 1.754 to 2.154 | 0.046 | 4.0 | 1.760 to 2.060 | 0.040 |

### (2) Optical Properties

With respect to the above obtained glass substrates with an antireflection film in Examples 1 to 15 and VFL in Example 16, the following optical properties were obtained. The results regarding the optical properties in Examples 1 to 7 are values determined by simulation from the thicknesses and the refractive indices of VFL and the respective layers. The results are shown in Table 4.

### (i) Reflectance (Rv) of antireflection film

The reflectance is a value obtained when incident light entering from the antireflection film side is reflected on the antireflection film face employing the visible light reflectance Rv. Namely, the reflectance of only the antireflection film was obtained. In accordance with JIS R 3106, the light source was the illuminant D65 and the angle of incidence was 60°.

In Example 16, the reflectance of VFL after heat treatment was obtained.

### (ii) Transmittance (Tv)

As the transmittance, the luminous transmittance Tv was employed. In accordance with JIS R 310.6, the light source was the illuminant A and the angle of incidence was 0°.

### (iii) Tint (reflected color)

As the tint, values (x, y) from the glass face side were employed. The light source was the illuminant D65, and the angle of incidence was 60°.

### (3) Film Resistance

With respect to the glass substrate with an antireflection film after heat treatment, the film resistance of the antireflection film was measured by using a two probe resistance meter (HIRESTA IP, manufactured by Mitsubishi Petrochemical Co., Ltd.). In Example 16, in the same manner as above, measurement was conducted with respect to VFL after heat treatment. The results are shown in Table 4.

### (4) Cracking

With respect to the glass substrate with an antireflection film after heat treatment, the presence or absence of cracking on the antireflection film was visually observed using an optical microscope. The results are shown in Table 4.

### (5) Warpage of the Substrate

With respect to the glass substrate with an antireflection film after heat treatment, the degree of concave with the film face facing inside was measured at the intersection of diagonals of the glass substrate. The results are shown in Table 4.

### (6) Abrasion Resistance

With respect to the glass substrate with an antireflection film after heat treatment, the film face was abraded with rotating truck wheels using a Taber abrader, and the state of film peeling after the test was observed. With respect to one without film peeling, the haze before and after the test was measured to determine ΔH% (different in the haze between before and after the test). The results are shown in Table 4. The conditions of the Taber test were a load of 2.45 N for 500 revolutions. A smaller difference in the haze indicates more excellent abrasion resistance. For practical use, it is preferably at most 5%, particularly preferably at most 3%.

**TABLE 4**

| | Rv (%) | Tv (%) | Tint (x, y) | Film resistance | Cracking | Warpage (mm) | Abrasion resistance (ΔH%) |
|---|---|---|---|---|---|---|---|
| Ex. 1 | 3.463 | 88.103 | (0.308, 0.326) | >1TΩ | Nil | - | - |
| Ex. 2 | 3.116 | 88.272 | (0.306, 0.321) | >1TΩ | Nil | - | - |
| Ex. 3 | 3.535 | 87.548 | (0.305, 0.324) | >1TΩ | Nil | - | - |
| Ex. 4 | 3.352 | 86.858 | (0.306, 0.325) | >1TΩ | Nil | - | - |
| Ex. 5 | 3.404 | 87.458 | (0.310, 0.329) | >1TΩ | Nil | - | - |
| Ex. 6 | 3.324 | 88.284 | (0.307, 0.325) | >1TΩ | Nil | - | - |
| Ex. 7 | 3.485 | 88.361 | (0.310, 0.328) | >1TΩ | Nil | - | - |
| Ex. 8 | 3.342 | 86.589 | (0.309, 0.326) | >1TΩ | Nil | 0.5 | <1.0 |
| Ex. 9 | 3.658 | 93.506 | (0.311, 0.327) | >1TΩ | Nil | 0.5 | <1.0 |
| Ex. 10 | 4.238 | 93.971 | (0.314, 0.327) | >1TΩ | Nil | 0.5 | 1.18 |
| Ex. 11 | 4.630 | 94.426 | (0.317, 0.331) | >1TΩ | Nil | 1.0 | 0.98 |
| Ex. 12 | 4.022 | 93.948 | (0.316, 0.322) | >1TΩ | Nil | 0.5 | 1.41 |
| Ex. 13 | 3.925 | 94.064 | (0.314, 0.322) | >1TΩ | Nil | 1.0 | 6.23 |
| Ex. 14 | 4.328 | 87.695 | (0.310, 0.330) | >1TΩ | Nil | 0.5 | - |
| Ex. 15 | 3.363 | 88.136 | (0.305, 0.323) | >1TΩ | Present | - | - |
| Ex. 16 | 9.232 | 85.746 | (0.308, 0.330) | >1TΩ | - | - | - |

As evident from Table 4, each of the glass substrates with an antireflection film (Examples 1 to 14) of the present invention had a high resistance, and no cracking occurred by heat treatment. Further, as the optical properties, they had a low reflectance and a high transmittance, and their tint was substantially the same as the glass substrate by itself having no antireflection film formed thereon.

On the other hand, in a case where all coating films made of a high refractive material are single layer films of a titanium oxide layer (Example 15), cracking occurred by heat treatment.

### INDUSTRIAL APPLICABILITY

By using a glass plate as a transparent substrate of the substrate with an antireflection film of the present invention, even when heat treatment of heating the glass plate at from 630 to 700°C is carried out to conduct bending of the glass plate, the antireflection film will not have cracking and will not be colored. Further, the same effects will be obtained when the glass plate is heated at from 550 to 700°C to conduct tempering of the glass plate.

The substrate with an antireflection film of the present invention is useful as a low reflecting glass for glass for a windshield of an automobile, and as a low reflecting glass for buildings and for various industries.

The entire disclosure of Japanese Patent Application No. 2005-023769 filed on January 31, 2005 including specification, claims and summary is incorporated herein by reference in its entirety.

## Claims

1. A substrate with an antireflection film comprising a transparent substrate and an antireflection film having even number layers in total of a coating film made of a high refractive material having a refractive index of at least 1.90 and a coating film made of a low refractive material having a refractive index of at most 1.56 laminated in this order from the transparent substrate side, wherein at least one coating film made of a high refractive material is a single layer film (a) of a titanium oxynitride layer, a laminated film (b) containing a titanium oxide layer and a zirconium oxide layer or a laminated film (c) containing a titanium oxynitride layer and a zirconium oxide layer.

2. A substrate with an antireflection film comprising a transparent substrate and an antireflection film having even number layers in total of a coating film made of a high refractive material having a refractive index of at least 1.90 and a coating film made of a low refractive material having a refractive index of at most 1.56 laminated in this order from the transparent substrate side, wherein at least one coating film made of a high refractive material is a single layer film (a) of a titanium oxynitride layer, a laminated film (b1) of a titanium oxide layer and a zirconium oxide layer or a laminated film (c1) of a titanium oxynitride layer and a zirconium oxide layer.

3. The substrate with an antireflection film according to Claim 2, wherein at least one coating film made of a high refractive material is a laminated film (c1) of a titanium oxynitride layer and a zirconium oxide layer.

4. A substrate with an antireflection film comprising a transparent substrate and an antireflection film having four layers in total of a coating film made of a high refractive material having a refractive index of at least 1.90 and a coating film made of a low refractive material having a refractive index of at most 1.56 laminated in this order from the transparent substrate side, wherein the antireflection film is an antireflection film having a coating film made of a high refractive material having a refractive index of at least 1.90, a single layer film of silicon oxide, a laminated film (c1) of a titanium oxynitride layer and a zirconium oxide layer, and a single layer film of silicon oxide laminated in this order from the transparent substrate side.

5. The substrate with an antireflection film according to Claim 4, wherein the coating film made of a high refractive material having a refractive index of at least 1.90 is a single layer film of a titanium oxide layer.

6. The substrate with an antireflection film according to any one of Claims 1 to 5, wherein the reflection of incident light entering from the antireflection film side at an angle of incidence of 60° on the antireflection film face is at most 6% by the visible light reflectance.

7. The substrate with an antireflection film according to any one of Claims 1 to 6, wherein the amount of nitrogen relative to titanium in the titanium oxynitride layer is from 0.1 to 80 at%.

8. The substrate with an antireflection film according to any one of Claims 1 to 7, wherein the amount of nitrogen relative to titanium in the titanium oxynitride layer before heat treatment is from 2 to 40 at%.

9. The substrate with an antireflection film according to any one of Claims 1 to 8, wherein the amount of nitrogen relative to titanium in the titanium oxynitride layer after heat treatment is from 0.1 to 20 at%.

10. A process for processing a substrate with an antireflection film, comprising a heating step of carrying the substrate with an antireflection film as defined in any one of Claims 1 to 9 into a heating furnace and heating it to a bending temperature, and a step of bending it to a desired shape.
